# EUROPEAN PATENT APPLICATION

(11) **EP 1 625 881 A1**
(43) Date of publication of application: **15.02.2006**
(21) Application number: 05017518.1
(22) Date of filing: 11.08.2005
(51) Int. Cl.: A63F 13/12

(54) **Game system, server and game processing method**

(30) Priority: 12.08.2004 JP 2004235594
(71) Applicant: Aruze Corp., Tokyo (JP)
(72) Inventor: Kobayashi, Takahiko, Tokyo 135-0063 (JP); Kogo, Junichi, Tokyo 135-0063 (JP)
(74) Representative: Grünecker, Kinkeldey, Stockmair & Schwanhäusser Anwaltssozietät

(57) **Abstract**

The invention provides a game system in which both a collection nature of a game using objects to be read (e.g., cards or action figures) and amusement of the game itself are realized. This game system includes a reading unit that reads character ID data peculiar to the characters, which are displayed by the objects to be read, from the objects to be read; a storing unit that stores the character ID data peculiar to the characters and character information of the characters associated with player ID data allocated to the players; and a character information updating unit that performs processing for updating character information of a character stored in the storing unit associated with one player ID data on the basis of character information of a character stored in the storing unit associated with another player ID data.

## Description

The present disclosure relates to subject matters contained in Japanese Patent Application No. 2004-235594 filed on August 12, 2004, which are expressly incorporated herein by reference in its entireties.

### BACKGROUND OF THE INVENTION

### 1. Field of the Invention

The present invention relates to a game system that makes it possible to execute a game, in which plural players play a battle of characters using cards, action figures, or the like representing the characters, a server that constitutes the game system, and a game processing method therefor.

### 2. Related Background Art

Conventionally, cards showing athletes, animation characters, and the like (so-called trading cards, etc.) and action figures have been collected by maniacs. However, recently, games played by using such cards or action figures have been provided and supported by wide range of age groups. It can be said that such games gain popularity because the games have a bilateral character, that is, an element of collection of cards, action figures, or the like, and amusement as games.

So-called amusement arcades and the like have introduced game systems that read data from cards, action figures, or the like having data concerning characters appearing in video games to advance the video games. The game systems have gained wide popularity. As an example of such game systems, Japanese Patent Laid-Open No. 2002-301264 discloses a game system that reads data from plural cards arranged on an arrangement panel of a terminal to advance a video game such as a soccer game on the basis of the data. In this game system, a player collects cards corresponding to players in the game to form a team and plays the game with another team. Even if the player is skilled in the game, abilities of the players in the game corresponding to the cards never improve. However, the player can reinforce the team by collecting cards corresponding to players in the game having higher abilities. Therefore, it is possible to arouse the player's desire for collection of cards.

In general, in a card game, ability values of characters are printed on surfaces of cards together with figures or the like of the characters. Thus, even if a player is skilled in the game, the ability values of the characters never change.

However, if players play a game using terminals as in the game system disclosed in Japanese Patent Laid-Open No. 2002-301264, it is difficult to perform exchange or the like of cards that card collectors have been performing conventionally. Therefore, a collection nature of the game is spoiled.

The invention has been devised in view of the problems and it is an object of the invention to provide a game system, in which both a collection nature of a game using objects to be read (e.g., cards or action figures) and amusement of the game itself are realized, and a server that constitutes the game system.

### SUMMARY OF THE INVENTION

In order to solve the problem, the invention provides a game system described below.

According to a first aspect of the invention, there is provided a game system including plural terminals and a server connected through a communication line, the game system executing a game that players play using the terminals and using objects to be read representing characters. The game system includes: reading means (corresponding to a reading unit) that reads character ID data peculiar to the characters stored in ID data storing means (corresponding to an ID data storing unit) included in the objects to be read; storing means (corresponding to a storing unit) that stores the character ID data peculiar to the characters and character information of the characters associated with player ID data allocated to the players; and character information updating means (corresponding to a character information updating unit) that performs processing for updating character information of a character stored in the storing means associated with one player IDdata on basis of character information of a character stored in the storing means associated with another player ID data.

According to the first aspect of the invention, it is possible to update character information of a character (e.g., ability values of the character or external constitution information concerning an external constitution of the character) stored in the storing means associated with one player ID data on the basis of character information of a character stored in the storing means associated with another player ID data. Thus, for example, a player can replace ability values of a character operated by the player himself/herself with ability values of a character operated by another player. It is possible to create an environment in which players can substantially exchange objects to be read (e.g., cards or action figures) in a game that the players play using the terminals. Therefore, it is possible to improve a collection nature of a game using objects to be read and realize both the collection nature of the objects to be read and amusement of the game itself.

Note that, in the invention, an object to be read representing a character means an object to be read having a picture, a decoration, a shape, or the like from which an appearance or a figure of the character is visually recognizable. Specifically, the object to be read representing a character is a card on which a picture of the character is printed, a molded product obtained by carving the character like an action figure or modeling after the character, or the like.

In the invention, examples of a game played by using objects to be read representing characters include a game in which a battle of one or plural characters is played and a game in which one or plural characters attain an object in the game set in advance.

In the invention, for example, when plural players play a game such as a battle of characters using objects to be read representing characters, respectively, all pieces of character information of the characters represented by the objects to be read used by the plural players, respectively, may be updated according to a result of the game, a state of the game, or the like. Alternatively, a part of character information of the characters represented by the objects to be read used by the plural players, respectively, may be updated. When the players play the battle of characters, character information of a character represented by an object to be read used by one player may be updated according to win or loss of the battle.

According to a second aspect of the invention, the game system according to the first aspect of the invention includes win or loss determining means (corresponding to win or loss determining unit) that determines, on the basis of the character information of the character stored in the storing means associated with the one player ID data and the character information of the character stored in the storing means associated with another player ID data, win or loss of a battle of the characters. In the game system, the character information updating means performs processing for updating the character information of the character stored in the storing means associated with one player ID data on the basis of the character information of the character stored in the storing means associated with another player ID data according to the win or loss of the battle of the characters determined by the win or loss determining means.

According to the second aspect of the invention, when a battle of characters is played, character information of one character (e.g., ability values of the character or external constitution information of the character) is updated on the basis of character information of another character according to win or loss of the battle. Thus, for example, it is possible to replace character information of winner with character information of a loser. In this way, in a game that players play using terminals, it is possible to create an environment in which an object to be read can be substantially transferred from a loser to winner of a battle. This makes it possible to provide a highly amusing game in which a collection nature of objects to be read and contents of the game are associated.

In the game system according to the second aspect of the invention, it is desirable that the game system includes update determining means (corresponding to an update determining unit) that compares, when win or loss is determined by the win or loss determining means, compares the character information of the character stored in the storing means associated with the one player ID data and the character information of the character stored in the storing means associated with another player ID data and determines whether the character information of the character stored in the storing means associated with the one player ID data should be updated on the basis of a result of the comparison. It is also desirable that the character information updating means performs, when it is determined by the update determining means to update the character information, processing for updating the character information of the character stored in the storing means associated with the one player ID data on the basis of the character information of the character stored in the storing means associated with another player ID data.

In this case, when a battle of characters is played, the update determining means compares character information of one character and character information of another character (e.g., ability values of the characters or external constitution information of the characters) and determines whether the character information of the one character should be updated on the basis of a result of the comparison. Thus, for example, when a character with low ability values defeats a character with high ability values, it is possible to replace ability values of the character with low ability values with ability values of the character with high ability values. This makes it possible to associate a collection nature of objects to be read and contents of the game more closely.

When the constitution described above is adopted, it is desirable that the game system includes judging means (corresponding to a judging unit) that judges, when it is determined by the win or loss determining means that the character associated with the one player ID data has won the game, whether character ID data identical with the character ID data of the character is present in one or plural character ID data stored in the storing means associated with another player ID data. It is also desirable that the update determining means compares, when it is judged by the judging means that an identical character ID data is present, the character information of the character stored in the storing means associated with the one player ID data and the character information of the character stored in the storing means associated with another player ID data and determines whether the character information of the character stored in the storing means associated with the one player ID data should be updated on the basis of determination of the comparison.

In this case, character information is updated when a player having lost a battle has anobject to be read representing the same character as a character having won the battle. Thus, in a game that players play using terminals, it is possible to create an environment in which the players can substantially exchange objects to be read representing the same character.

According to a third aspect of the invention, there is provided a server that constitutes a game system in which plural terminals and the server are connected through a communication line, and the game system executes a game that players play using the terminals and using objects to be read representing characters. The server includes: storing means that receives, from the terminals that read character ID data peculiar to the characters stored in ID data storing means included in the objects to be read, the character ID data and stores the received character ID data peculiar to the characters and character information of the characters associated with player ID data allocated to the players; and character information updatingmeans that performs processing for updating character information of a character stored in the storing means associated with one player ID data on the basis of character information of a character stored in the storing means associated with another player ID data.
[0020]

According to a third aspect of the invention, it is possible to update character information of a character (e.g., ability values of the character or external constitution information concerning an external constitution of the character) stored in the storing means associated with one player ID data on the basis of character information of a character stored in the storing means associated with another player ID data. Thus, for example, a player can replace ability values of a character operated by the player himself/herself with ability values of a character operated by another player. It is possible to create an environment in which players can substantially exchange objects to be read (e.g., cards or action figures) in a game that the players play using the terminals. Therefore, it is possible to improve a collection nature of a game using objects to be read and realize both the collection nature of the objects to be read and amusement of the game itself.

Any of the first to third aspects of the invention can be realized as a game processing method.

According to the invention, it is possible to realize both a collection nature of a game using objects to be read (e.g., cards or action figures) and amusement of the game itself.

Additional objects and advantages of the invention will be set forth in the description which follows, and in part will be obvious from the description, or may be learned by practice of the invention. The objects and advantages of the invention may be realized and obtained by means of the instrumentalities and combination particularly pointed out hereinafter.

### BRIEF DESCRIPTION OF THE DRAWINGS

Fig. 1 is a diagram showing of a game system according to the invention;
Fig. 2 is a block diagram showing a hardware configuration of a center server;
Fig. 3 is a block diagram showing a hardware configuration of a outlet server;
Fig. 4 is a perspective view showing external appearances of eight terminals and a card vending machine installed in one outlet;
Fig. 5 is a perspective view showing an external appearance of a terminal;
Fig. 6 is a disassembled front view schematically showing an action figure;
Fig. 7 is a block diagram showing a hardware configuration of the terminal;
Fig. 8 is a flowchart of a flow of processing until start of a game in the terminal and the center server;
Fig. 9 is a diagram showing an example of a character information table;
Fig. 10 is a flowchart of an example of game processing executed in the terminal;
Fig. 11 is a diagram showing another example of the character information table;
Fig. 12 is a flowchart of another example of the game processing executed in the terminal;
Fig. 13 is a diagram showing an example of a character information conversion table; and
Fig. 14 is a diagram showing another example of the character information table.

The accompanying drawings, which are incorporated in and constitute apart of the specification, illustrate embodiments of the invention, and together with the general description given above and the detailed description of the embodiments given below, serve to explain the principles of the invention.

### DETAILED DESCRIPTION OF THE PREFERRED EMBODIMENTS

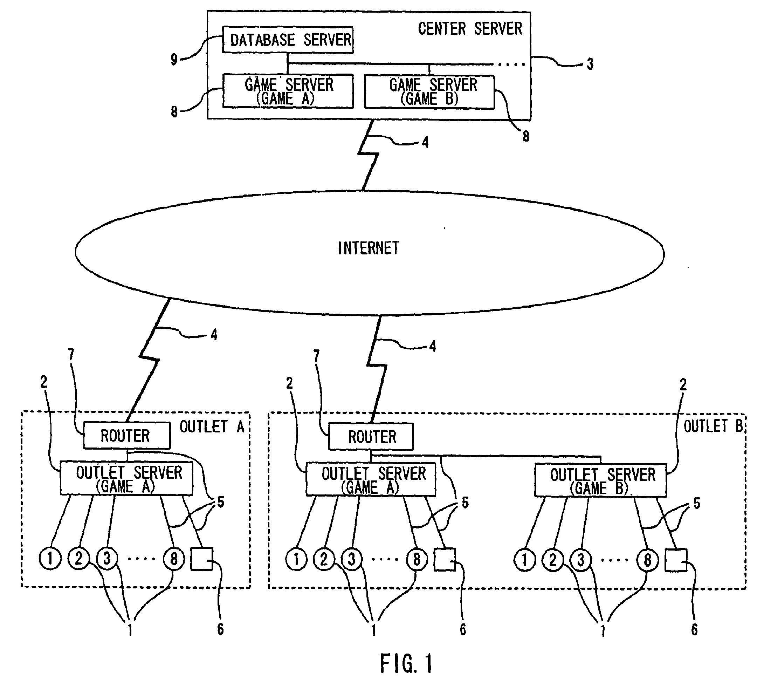

Fig. 1 is a diagram of a game system according to the invention. The game system includes plural terminals 1, outlet servers 2 connected to the plural terminals 1 through private lines 5 so as to be capable of communicating with one another, and a center server 3 connected to the plural outlet servers 2 through communication lines 4 so as to be capable of communicating with one another. Moreover, the game system further includes card vending machines 6 connected to the outlet servers 2 through the private lines 5, respectively. Note that, in a outlet B, the outlet server 2 for a game A and the outlet server 2 for a game B are installed.
[0023]

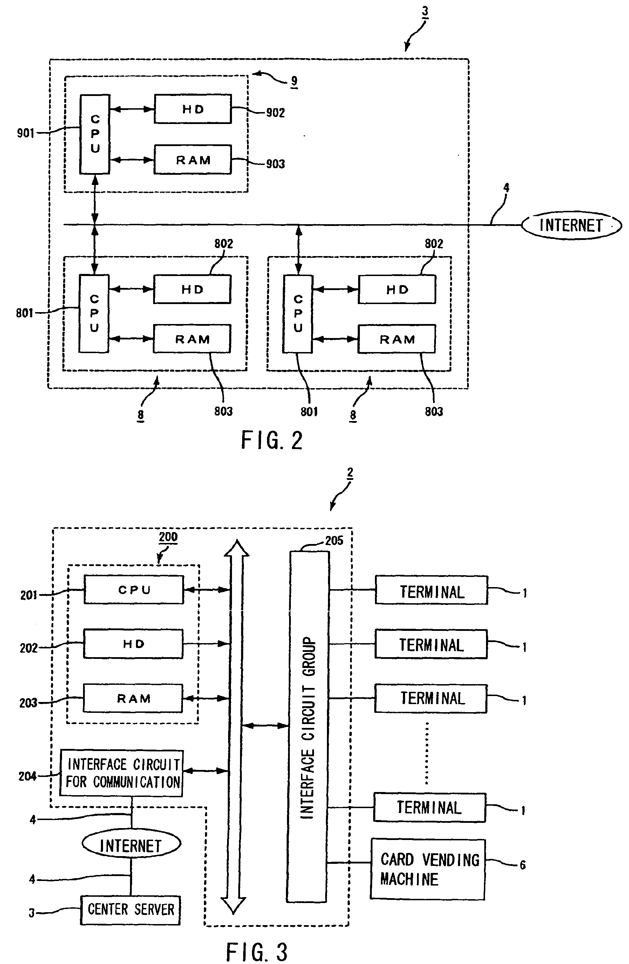

Fig. 2 is a diagram of the center server 3. The center server 3 includes a database server 9 and plural game servers 8. The database server 9 includes a Central Processing Unit (CPU) 901 serving as an arithmetic processing unit, a Hard Disk (HD) 902 serving as a main storage, and a Random Access Memory (RAM) 903 serving as an auxiliary storage. The database server 9 performs data management for each of ID data given to players, authentication of the players at the time of start of a game, and processing for transmitting game data.

Specifically, as the data management, for example, the database server 9 performs management (storage, setting, update, etc.) for ID data given to each of the players, passwords used at the time of authentication of the players, types of games played by the players, game data, and the like. The game data includes, for example, character information and data concerning a state of progression of a game. These data are stored in the HD 902 of the database server 9.

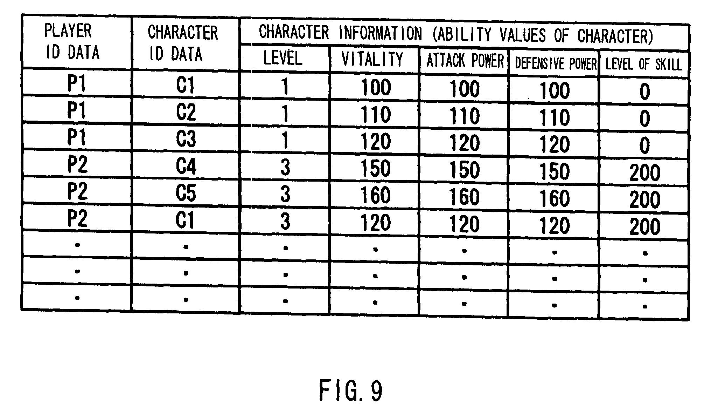

In the explanation of this embodiment, the character information is ability values of a character. However, in the invention, the character information is not specifically limited. For example, the character information may be, for example, external constitution information concerning an external constitution of the character. The character information is associated with character ID data peculiar to characters and stored in the HD 902 of the database server 9 for each of player ID data allocated to players (see Fig. 9).

As the authentication of players at the time of start of a game, for example, the database server 9 authenticates the players using player ID data, which ID card readers (not shown) included in the terminals 1 read, and passwords, which the players input by operating the terminals 1, and permits the players to participate in a game. In the explanation of this embodiment, authentication of the players is performed using both the ID data and the passwords. However, in the invention, for example, authentication of the players may be performed using only the player ID data read from the ID cards. Alternatively, authentication of the players may be performed using the passwords, which the players input by operating the terminals 1, without using the ID cards.

As the processing for transmitting game data, for example, the database server 9 transmits, on the basis of player ID data and character ID data that IC chip readers (not shown) included in the terminals 1 read from action figures, character information or the like corresponding to characters with the character ID data to the terminals 1 out of the game data. However, when the players play a game for second or subsequent time, even if the action figures are used, it is possible to determine a game on the bass of the player ID data, input of passwords by operation of the players, and a type of a game. In addition, when the action figures are not used, it is possible to set predetermined limitations.

The game servers 8 are set associated with each game that can be executed in the game system according to this embodiment. Note that one of these plural game servers 8 (the game server 8 for a game A) is a game server corresponding to a game in accordance with this embodiment. The game server 8 includes a CPU 801 serving as an arithmetic processing unit, an HD 802 serving as a main storage, and a RAM 803 serving as an auxiliary storage. The game server 8 performs processing for matching among the terminals 1 installed in different outlets and traffic control for transmission and reception of data after the matching.

Specifically, as the processing for matching among the terminals 1, when a certain player operates the terminal 1 and participates in a game, the game server 8 judges whether another player is participating in the game. When it is judged that another player is participating in the game, the game server 8 performs matching of the terminal 1 operated by the certain player and the terminal 1 operated by another player. On the other hand, when it is judged that another player is not participating in the game, the game server 8 sets a CPU player. In setting a CPU player, the game server 8 may set the outlet server 2 as the CPU player or may set the center server 3 (e.g., the game server 8) as the CPU player.

As the traffic control for transmission and reception of data after the matching, the game server 8 performs traffic control for transmission and reception of data between the terminal 1 subjected to matching by the matching processing. For example, the game server 8 transmits data, which is received from the terminal 1 connected to the outlet server (for the game A) 2 in the outlet A, to the terminal 1 connected to the outlet server (for the game A) 2 in the outlet B. In this way, the outlet servers 2 according to this embodiment directly receive only data from the center server 3 and never transmit and receive data directly between the outlet servers 2.

As shown in Fig. 1, the outlet servers 2 are connected to the center server 3 through routers 7. The routers 7 have predetermined routing tables. In the case in which plural outlet servers 2 are installed in an identical outlet as in the outlet B shown in the figure, when the router 7 receives game data or the like from the center server 3, the router 7 refers to the routing table and transmits the game data to the outlet server 2 that is connected to the terminals 1, to which the game data is transmitted, through the private lines 5. In the case in which data is transmitted and received among the terminals 1 connected to the plural outlet servers 2 installed in the identical outlet, when the router 7 receives game data or the like from the terminals through the outlet servers 2, the router 7 refers to the routing table and transmits the game data to the outlet servers 2 connected to the terminals 1, to which the game data is transmitted, through the private lines 5.

The center server 3, the game server 8, and/or outlet server 2 can function as at least one of reading means, storing means, character information updating means, win or loss determining means, update determining means, and judging means.

Fig. 3 is a diagram of the outlet server 2. The outlet server 2 includes a CPU 201 serving as an arithmetic processing unit, an HD 202 serving as a main storage, and a RAM 203 serving as an auxiliary storage. The outlet server 2 is connected to the plural terminals 1 by an interface circuit group 205 through the private lines 5. The outlet server 2 is connected to the center server 3 by an interface circuit for communication 204 through the communication line 4. The outlet server 2 performs traffic control for transmission and reception of data between the center server 3 and the terminals 1 or among the terminals 1 connected to the plural outlet servers 2 installed in an identical outlet, respectively, and download of an application to the terminals 1.

Specifically, as the traffic control, the outlet server 2 performs traffic control for transmission and reception of game data or the like between the center server 3 and the terminals 1. However, when the terminals 1, to which the game data or the like is transmitted, are connected to the same outlet server 2 or connected to another outlet server 2 installed in the identical outlet, the outlet server 2 transmits the game data or the like to the terminals 1 without transmitting the game data or the like to the center server 3.

As the download of an application, at timing when a request signal for requesting download from the center server 3 is received from the terminal 1, the outlet server 2 downloads an application to the terminal 1. The application includes various data (e.g., image data) and programs related to contents of a game and a program for a board for allocating game functions to input means (e.g., a touch panel and plural input switches; not shown) provided in the terminals. The application is stored in the HD 202 of the outlet server 2. The download of an application is not limited to download from the outlet server 2 and an application may be download from the center server 3 (e.g., the game server 8).

The terminal 1 is connected to the outlet server 2 through the private line 5. The terminal 1 performs download of an application and progression of a game. Specifically, as the download of an application, when a power supply is turned on, the terminal 1 transmits a request signal for requesting download of the application to the outlet server 2 and performs download of the application. The downloaded application is stored in a temporarily storable area such as a RAM in the terminal 1. As the progression of a game, the terminal 1 advances the game using the downloaded application. The terminal 1 advances the game as described below. The terminal 1 receive data for each of ID data given to players by the database server 9 at the time of start of the game. During progression of the game, data of the terminal 1 and the other terminals 1 in the identical game is transmitted and received through the outlet server 2 and the center server 3. However, when the other terminals 1 are connected to the outlet server 2 or connected to another outlet server 2 installed in the identical outlet, the terminal 1 transmits game data or the like to the terminals 1 without transmitting the game data or the like to the center server 3. When the game ends, the terminal 1 transmits game data updated during the game or a game result itself to the database server 9. Note that the progression of the game does not always have to be performed by the terminal 1 and may be performed by the outlet server 2.

The card vending machine 6 is capable of communicating with the center server 3 through the outlet server 2. The card vending machine 6 accepts operation for inputtingpersonal information performed by a player and sells an ID card storing ID data. The ID card is used in starting a game. The ID data is read from the ID card by an ID card reader included in the terminal 1.

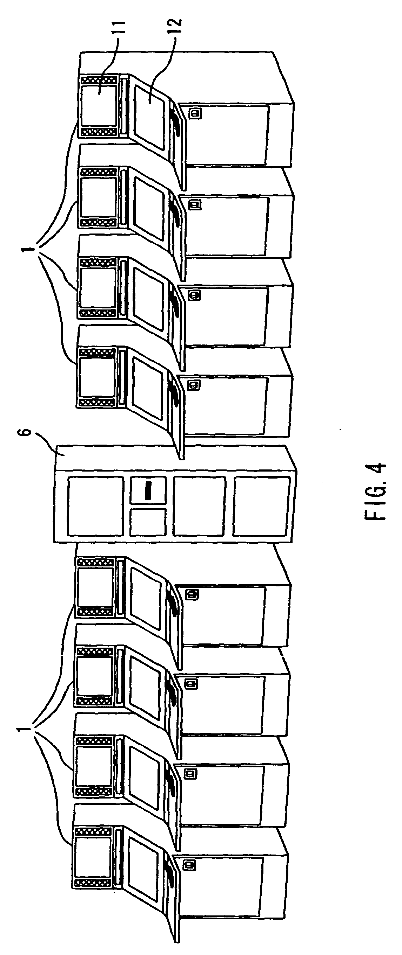

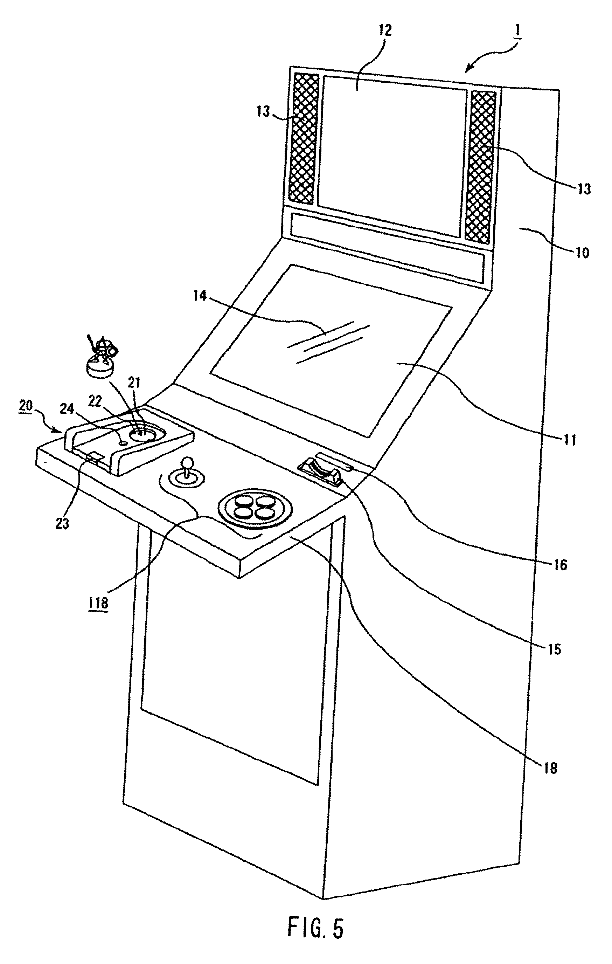

Fig. 4 is a perspective view showing external appearances of eight terminals and a card vending machine installed in one outlet. Fig. 5 is a perspective view showing an external appearance of a terminal. Note that, in the following explanation, an arcade game apparatus including two displays (a first display 11 and a second display 12) is explained as an example of the terminal. However, the invention is not limited to this example. It is possible to apply the invention to a video game apparatus for home use constituted by connecting a video game apparatus to a television for home use, a personal computer that functions as a video game apparatus by executing a video game program, and the like in the same manner.

In this embodiment, a game performed by using the terminals 1 is a Real Time Strategy game (RTS) using action figures. A player operating the terminal 1 and players operating the other terminals 1 or CPU players arrange characters on a play fieldpresent in a virtual game space and operate the characters to play a battle. The action figures represent characters and store character ID data peculiar to the characters. The action figures are sold by, for example, the card vending machine 6.

As shown in Fig. 5, the terminal 1 includes a cabinet 10, the first display 11 provided on a front surface of the cabinet 10 to slant at a predetermined angle, and the second display 12 provided above the first display 11. An image showing a play field, on which ally characters operated by a player and enemy characters operated by another player are arranged, is displayed on the first display 11. An image showing a battle of the ally characters and the enemy characters is displayed on the second display 12 when the battle of the ally characters and the enemy characters is played on the play field.

In the explanation of this embodiment, the terminal 1 includes the first display 11 and the second display 12. However, in the invention, the number of displays included in a terminal is not specifically limited. For example, the number may be one or may be three or more.

A touch panel 14 is set in front of the first display 11. The touch panel 14 is capable of detecting a touch by the players. When the touch panel 14 detects the touch, the touch panel 14 outputs a detection signal indicating a touch position to an operation input unit 114 (not shown) described later. The players are capable of touching the touch panel 14 to input various instructions. Speakers 13 outputting sounds are provided on both left and right sides of the second display 12.

A coin insertion slot 15, in which a coin is inputted, and an ID card insertion slot 16, in which an ID card is inserted, are provided below the first display 11. The coin inputted in the coin insertion slot 15 is detected by a coin sensor 115 (not shown). A player ID data is read from the ID card, which is inserted in the ID card insertion slot 16, by an ID card reader 116 (not shown).

An control board 18 projecting forward is provided in the cabinet 10. An authentication machine 20, on which an action figure can be placed, is provided on an upper surface of the control board 18. In the figure, only one authentication machine 20 is shown. However, plural authentication machines 20 may be provided. A recessed area 21 is provided in an upper part of the authentication machine 20. The action figure can be fit in the recessed area 21. In other words, the recessed area 21 has a shape in which a pedestal section of the action figure is fit without a gap and has a structure in which 2/3 or more of the pedestal section of the action figure is fit. A stopper 22 for fixing the action figure is provided in the recessed area 21 to prevent the action figure from coming off, toppling, or deviating from a right position. A removing switch 23 for removing the action figure from the recessed area 21 is provided in the authentication machine 20. An IC chip reader 25 (not shown) is provided inside the authentication machine 20. The IC chip reader 25 is capable of reading data of an IC chip incorporated in the action figure. An LED 24 is also provided in the authentication machine 20. The LED 24 blinks when the IC chip reader 25 reads data (e.g., character ID data) of the action figure.

An operation switch 118 including a direction lever, plural buttons, and the like is provided on an upper surface of the control board 18. The players can operate the operation switch 118 to input predetermined instructions.

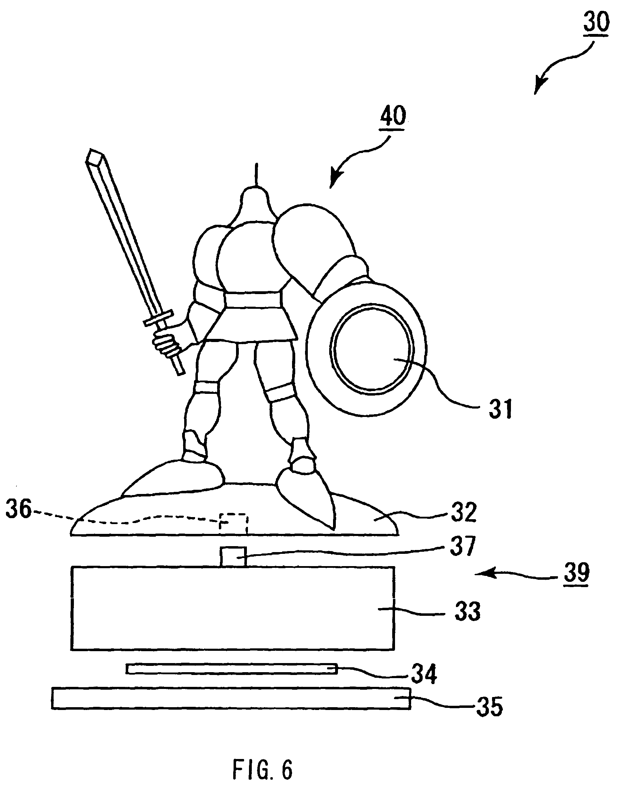

Fig. 6 is a disassembled front view schematically showing an example of an action figure. An action figure 30 includes a pedestal section 39 and an action figure body section 40. The pedestal section 39 is formed in a columnar shape and includes an upper lid 33, an IC chip 34, and a lower lid 35. The IC chip 34 is equivalent to the ID data storing means in the invention. The IC chip 34 is sandwiched by the upper lid 33 and the lower lid 35 such that the IC chip 34 cannot be removed. Identification information and the like of a character indicated by the action figure body section 40 are stored in the IC chip 34. A projection 37 is provided on the upper lid 33. A diameter of the lower lid 35 is set to be slightly larger than a diameter of the upper lid 33 such that the action figure 30 is fixed by the stopper 22 of the authentication machine 20.

The action figurebody section 40 includes an action figure body 31 and an action figure body base section 32. A recess 36 is provided in the action figure body base section 32. The recess 36 and the projection 37 are provided to prevent positional deviation from occurring when the pedestal section 39 and the action figure body section 40 are bonded.

In the explanation of this embodiment, an object to be read is an action figure incorporating an IC chip. However, an object to be read in the invention is not limited to this example and may be any object as long as the object is an object that physically exists, that is, a tangible object. Examples of the object to be read include a card, on a surface of which a pattern indicating character ID data is printed with a special paint absorbing or reflecting invisible light (an infrared ray, etc.), and a card incorporating an IC chip. When the card, on a surface of which a pattern indicating character ID data is printed with a special paint absorbing or reflecting invisible light, is used as the object to be read, a light source emitting invisible light and an image sensor receiving the invisible light are set in the terminal 1. The invisible light emitted from the light source is absorbed or reflected on the surface according to the pattern indicating the character ID data, which is printed on the surface of the card with the special paint, and received by the image sensor. As a result, the character ID data printed on the surface of the card is read. In this case, the image sensor functions as reading means. In this invention, the ID data storing means included in the object to be read refers to means that stores data peculiar to a character represented by the object to be read. Examples of the ID data storing means include an IC chip, a one-dimensional code (a so-called bar code), and a two-dimensional code.

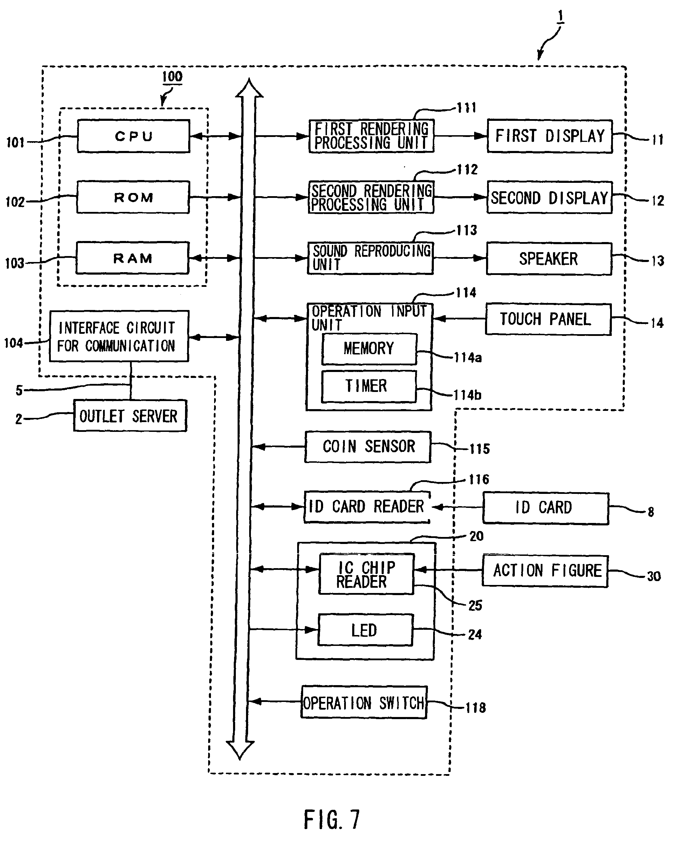

Fig. 7 is a block diagram showing a hardware configuration of the terminal 1. A control unit 100 controls operations of the entire terminal 1 and includes a CPU 101, a ROM 102, and a RAM 103.

The ROM 102 stores various programs and data for realizing functions of the terminal 1. The ROM 103 stores an application downloaded from the outlet server 2, data being processed, and the like. The CPU 101 executes the application stored in the RAM 13 to advance a game.

An interface circuit for communication 104 is a circuit for transmitting and receiving programs and data to and from the outlet server 2 via the private line 5. A first rendering processing unit 111 causes the first display 11 to display a game image including a play field image. The first rendering processing unit 111 includes a Video Date Processor (VDP) and a video RAM. The first rendering processing unit 111 extracts image data stored in the RAM 103 and stores various image data in the video RAM in accordance with a priority of display on the first display 11 to thereby generate game images and output the game images to the first display 11. As a result, an image representing a play field, in which ally characters and enemy characters are arranged, is displayed on the first display 11.

A second rendering processing unit 112 causes the second display 12 to display a battle image representing a battle of the ally characters and the enemy characters. The second rendering processing unit 112 includes a Video Date Processor (VDP) and a video RAM. The second rendering processing unit 112 performs calculation for converting image data (e.g., an object) stored in the RAM 103 from a position on a three-dimensional space to a position on a pseudo three-dimensional space, light source calculation processing, and the like. In addition, the second rendering processing unit 112 performs processing for writing image data, which should be rendered, in the video RAM (e.g., mapping of texture data to an area of the video RAM designated by a polygon) on the basis of a result of the calculation to thereby generate a battle image and outputs the battle image to the second display 12. As a result, the battle image is displayed on the second display 12.

A sound generating unit 113 outputs a predetermined sound, background music, or the like to the speakers 12. The touch panel 14 is a rectangular thin layer body provided in front of the first display 11. The touch panel 14 is constituted by, for example, covering pressure sensitive materials, which consist of linear transparent materials, arranged at predetermined pitches vertically and horizontally, respectively, with a transparent cover. It is possible to use a publicly-known touch panel as the touch panel 14. The touch panel 14 outputs a detection signal indicating a touch position to the operation input unit 114 when the touch panel 14 is touched.

The operation input unit 114 is a microcomputer including a memory 114a and a timer 114b. The operation input unit 114 buffers the touch position, which is indicated by the detection signal outputted from the touch panel 14, in a predetermined area of the memory 114a as data, judges contents of an instruction sequentially using the timer 114b or the like on the basis of the data, and supplies a result of the judgment to the control unit 100 as an operation command. Since the detection signal is buffered in the memory 114a of the operation input unit 114 as data in this way, for example, even if instructions for plural character images are inputted by the touch panel 14 in an instance, the operation input unit 114 can execute processing corresponding to the instructions simultaneously or in parallel.

The coin sensor 115 transmits a predetermined signal to the control unit 100 when the coin sensor 115 detects a coin inputted from the coin insertion slot 15. The ID card reader 116 reads player ID data from the ID card 8 inserted in the ID card insertion slot 16 and supplies the player ID data to the control unit 100. The IC chip reader 25 of the authentication machine 20 reads character ID data from the IC chip 34 incorporated in the action figure 30 and supplies the character ID data to the control unit 100. The IC chip reader 25 functions as reading means that reads character ID data from the action figure 30 serving as an object to be read. The LED 24 of the authentication machine 20 blinks when authentication of the action figure 30 is performed by the authentication machine 20. The operation switch 118 supplies a predetermined signal to the control unit 100 when the operation switch 118 is operated by a player.

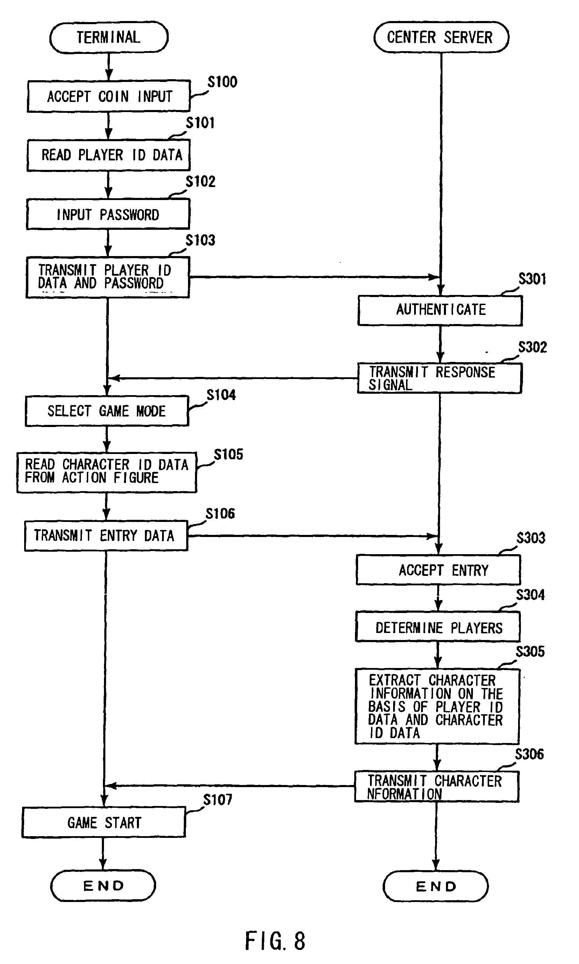

Fig. 8 is a flowchart of a flow of processing until start of a game in the terminal 1 and the center server 3. First, the CPU 101 of the terminal 1 accepts input of a coin from the coin insertion slot 15 (step S100). When the CPU 101 receives a predetermined signal, which is outputted from the coin sensor 115 when the coin is detected, the CPU 101 reads player ID data from the ID card 8 inserted in the ID card insertion slot 16 using the ID card reader 116 (step S101). The CPU 101 accepts input of a password by operation of a player (step S102). The CPU 101 transmits the read player ID data to the center server 3 through the private line 5 and the outlet server 2 using the interface circuit for communication 104 together with the password inputted by the operation of the player (step S103).

The CPU 901 included in the database server 9 of the center server 3 judges whether the player ID data received from the terminal 1 is present in player ID data stored in the HD 902. When it is judged that the player ID data received from the terminal 1 is present, the CPU 901 performs authentication by judging whether a password of the player stored in the HD902 associated with the player ID data and the password received from the terminal 1 coincide with each other (step S301). The CPU 901 of the database server 9 transmits a result of the authentication to the terminal 1 as a response signal (step S302).

When the terminal 1 receives the response signal from the center server 3 (the database server 9 in the center server 3), the CPU 101 of the terminal 1 accepts selection of a game mode (step S104). As the selection of a game mode, it is possible to perform selection of a play field in which a game is played and selection of players (e. g., selection concerning whether players, who play a game using the terminals 1 in the identical outlet, play a game and selection concerning whether a CPU player is allowed to participate in a game).

The CPU 101 reads character ID data from the action figure 30 set in the authenticationmachine 20 using the IC chip reader 25 (step S105). In this case, the IC chip reader 25 functions as reading means that reads character ID data. The CPU 101 transmits entry data including the read character ID data and the like to the center server 3 through the outlet server 2 (step S106).

On the other hand, the CPU 801 included in the game server 8 of the center server 3 receives the entry data from the terminal 1 and accepts entry of the player (step S303). The CPU 801 included in the game server 8 determines players who play a game in an identical play field (step S305). When the number of human players is less than a predetermined number (e.g., four) or when it is selected in the selection of a game mode that a game is played with a computer, the CPU 801 sets a CPU player.

The CPU 901 included in the database server 9 of the center server 3 extracts character information stored in the HD902 on the basis of the player ID data and the character ID data received from the terminal 1 (step S305). A character information table shown in Fig. 9 is stored in the HD 902.

Fig. 9 is a diagram showing an example of a character information table. In the character information table, character information is stored for each player ID data associated with character ID data. Specifically, character information corresponding to character ID data "C1", "C2", and "C3" is stored as character information corresponding to player ID data "P1". Character information corresponding to character ID data "C4", "C5", and "C1" is stored as character information corresponding to player ID data "P2".

In addition, as character information, ability values (a level, life force, offensive power, defensive power, and a level of skill) of a character are stored. The level indicates strength of the character in a game stepwise. In an identical character, as a numerical value of the level is higher, the character has a higher level and stronger in the game. The life force indicates remaining physical strength of the character. When the character is attacked by an opponent character and damaged, the life force decreases. When the life force decreases to zero, the character disappears from the play field and cannotbe used for the game for a predetermined period. The offensive power is power with which the character can damage other characters. As a numerical value of the offensive power is higher, the character can give more damages to the other characters. The defensive power is power with which the character defends itself against attacks from the other characters. As a numerical value of the defensive power is higher, the character can reduce damages by attacks from the other characters.

In step S305, the CPU 901 extracts, on the basis of the player ID data and the character ID data received from the terminal 1, character information corresponding to the player ID data and the character ID data from the character information table stored in the HD 902. The CPU 901 transmits the character information extracted in step S305 to the terminal 1 through the outlet server 2 (step S306). The CPU 101 of the terminal 1, which receives the character information from the database server 9, stores the character information in the RAM 103 and starts a game using the character information (step S107).

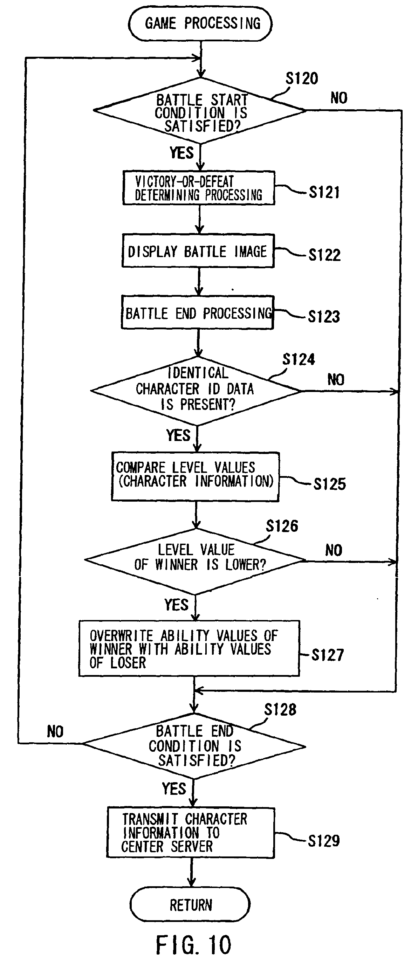

When the processing described in Fig. 8 is executed and the game is started, game processing (see Fig. 10) described later is performed. When this game processing is performed, the terminal 1 performs transmission and reception of data such as character information to and from the other terminals 1 as interrupt processing at a predetermined period. Temporal synchronization of the data such as character information is controlled among the terminals 1. Therefore, during progression of the game, the same character information is stored in the RAMs 103 of the terminals 1 in which the game is played. The RAM 103 included in the terminal 1 functions as storing means that stores character ID data and ability values (character information) of a character corresponding to the character ID data associated with player ID data.

Fig. 10 is a flowchart of an example of game processing executed in the terminal 1. First, the CPU 101 of the terminal 1 judges whether a condition for starting a battle of characters (hereinafter also referred to as battle starting condition) is satisfied (step S120). The battle starting condition is not specifically limited. For example, as examples of the battle starting conditions, an ally character comes into contact with or comes close to an enemy character on a play field or an instruction to cause an ally character to battle an enemy character is inputted by a player.

When it is judged in step S120 that the battle starting condition is satisfied, the CPU 101 reads out a program for a battle stored in the RAM 103 and executes the program. The CPU 101 performs arithmetic operation processing on the basis of ability values of ally characters and ability values of enemy characters stored in the RAM 103 and determines a process and a result of a battle (step S121). The result of a battle is which character(s) to win the battle and ability values of the characters at the time of end of the battle. The process of a battle is a process until the result of a battle is obtained. Specifically, the process of a battle is behaviors of the characters at the time of the battle (e.g., physical attack, use of magic, and defense) and results due to the behaviors (e.g., damage values due to attack or magic). In step S121, the CPU 101 of the terminal 1 functions as win or loss determining means that determines, on the basis of ability values (character information) of a character stored in the RAM 103 (storing means) associated with one player ID data and ability values (character information) of a character stored in the RAM103 (storing means) associated with another player ID data, win or loss of a battle of the characters. In the explanation of this embodiment, a battle of characters is played according to arithmetic operation processing of a computer. However, the invention is not limited to this example. For example, it is also possible that behaviors of characters are determined on the basis of instructions inputted to the characters through terminals by players and results due to the behaviors are determined by arithmetic operation processing of a computer to determine a process and a result of the battle.

The CPU 101 transmits a display command corresponding to the process and the result of the battle determined in step S121 to the second rendering processing unit 112 (step S122). The second rendering processing unit 112 performs calculation for converting objects (e.g., objects constituting the ally characters and objects constituting the enemy characters) stored in the RAM 103 from positions on a three-dimensional space to positions on a pseudo three-dimensional space, light source calculation processing, and the like. In addition, the second rendering processing unit 112 performs processing for writing image data, which should be rendered, in the video RAM (e.g., mapping of texture data to an area of the video RAM designated by a polygon) on the basis of a result of the calculation to thereby generate a battle image and outputs the battle image to the second display 12. As a result, the battle image is displayed on the second display 12.

The CPU 101 performs processing for updating the ability values (character information) of the characters stored in the RAM 103 according to the result of the battle determined in step S121 (step S123). Specifically, the CPU 101 performs, for example, processing for reducing the life force according to damages given by opponent characters or adding the level of skill according to level values or the like of the opponents.

The CPU 101 judges whether character ID data identical with character ID data of a character, which has won the battle, is present in one or plural character ID data, which are stored in the RAM 103 of the terminal 1 associated with player ID data of opponent players, according to the result of the battle determined in step S121 (step S124). In step S124, when it is determined that a character corresponding to one player ID data has won the battle, the CPU 101 of the terminal 1 functions as judging means that judges whether character ID data identical with character ID data of the character is present in one or plural character ID data stored in the RAM 103 (storing means) associated with player ID data of the opponents.

To explain the above with reference to Fig. 9, for example, when the character "C1" of the player "P1" and the character "C1" of the player "P2" fights a battle and the character "C1" of the player "P1" has won, the CPU 101 judges whether the character ID data "C1" of the character, which has won the battle" is present in plural character ID data stored in the RAM 103 of the terminal 1 associated with the player ID data "P2". Note that, in this case, it is judged that the character ID data of the character, which has won the battle, is present in the plural character ID data stored in the RAM 103 of the terminal 1 associated with the player ID data "P2".

In this embodiment, it is judged whether the character ID data identical with the character ID data of the character, which has won the battle, is present in the plural character ID data stored in the RAM 103 of the terminal 1 associated with the player ID data of the opponent. However, the invention is not limited to this example. For example, it may be judged whether character ID data of a character, which has won a battle, coincides with character ID data of a character that has lost the battle. In addition, it may be judged whether any one of character ID data, which are stored in the RAM 103 of the terminal 1 associated with player ID data of a player who has won a battle, is present in plural character ID data stored in the RAM 103 of the terminal 1 associated with player ID data of an opponent.

When it is judged in step S124 that the identical character ID data is present, the CPU 101 compares level values of the two characters that fought the battle (step S125) . As a result, the CPU 101 judges whether a level value of the winner is lower (step S126). For example, referring to the character information table shown in Fig. 9, when a level value of the character "C1" of the player "P1", who is winner, and a level value of the character "C1" of the player "P2", who is an object of comparison, are compared, the level value of the winner is lower. In steps S125 and S126, the CPU 101 of the terminal 1 functions as update determining means that compares ability values (character information) of the character stored in the RAM 103 (storing means) associated with one player ID data and ability values (character information) of the character stored in the RAM 103 (storing means) associated with the player ID data of the opponent and determines, on the basis of a result of the comparison, whether the ability values (character information) of the character stored in the RAM 103 (storing means) associated with the one player ID should be updated.

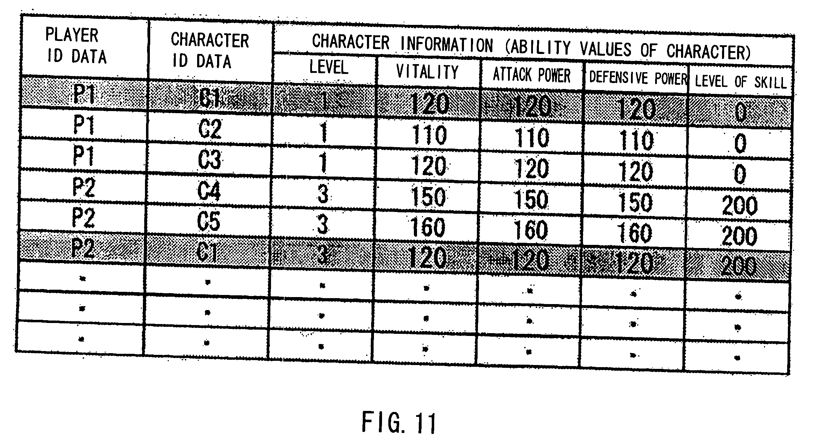

When it is judges that the level value of the winner is lower, the CPU 101 performs processing for overwriting ability values of the winner stored in the RAM 103 with ability values of the loser stored in the RAM 103 (step S127). For example, when the character "C1" of the player "P1" and the character "C1" of the player "P2" fights a battle and the character "C1" of the player "P1" has won the battle, a level value of the character "C1" of the player "P1" is lower than a level value of the character "C1" of the player "P2" (see steps S125 and S126). Thus, in step S127, the CPU 101 performs processing for overwriting ability values of the character "C1" of the player "P1" with ability values of the character "C1" of the player "P2". As a result, as shown in Fig. 11, the ability values of the character "C1" of the player "P1" are updated. In step S127, the CPU 101 functions as character information updating means that updates character information stored in the RAM 103 (storing means) associated with one player ID data on the basis of character information stored in the RAM 103 (storing means) associated with another player ID data. In the explanation of this embodiment, character information stored in the RAM 103 associated with one player ID data is overwritten with character information stored in the RAM 103 associated with another player ID data, whereby the character information stored in the RAM 103 associated with the one player ID data is updated. However, the invention is not limited to this example. In addition, as in this embodiment, when character information consists of plural items, character information to be updated may be all or a part of the plural items.

When it is judged in step S120 that the battle starting condition is not satisfied, when it is judged in step S124 that the identical character ID data is not present, when it is judged in step S126 that the level value of the winner is not lower, or when the processing in step S127 is executed, the CPU 101 judges whether a game ending condition is satisfied (step S128). As an example of the game ending condition, life force of all ally characters or all enemy characters is reduced to zero.

When it is judged in step S128 that the game ending condition is not satisfied, the CPU 101 shifts the processing to step S120. On the other hand, when it is judged in step S128 that the game ending condition is satisfied, the CPU 101 transmits the character information stored in the RAM 103 to the center server 3 (step S129) and ends this subroutine. Note that the character information transmitted to the center server 3 in step S129 is stored in the HD 902 included in the database server 9 of the center server 3 for each of player ID data associated with character ID data.

As described above, according to the game system in this embodiment, it is possible to update ability values (character information) of a character stored in the RAM 103 (storing means) associated with one player ID data on the basis of ability values (character information) of a character stored in the RAM 103 (storing means) associated with another player ID data. Thus, for example, a player can replace ability values of a character operated by the player himself/herself with ability values of a character operated by another player. It is possible to create an environment in which players can substantially exchange action figures (objects to be read) in a game that the players play using the terminals. Therefore, it is possible to improve a collection nature of a game using objects to be read and realize both the collection nature of the action figures and amusement of the game itself.

According to the game system in this embodiment, when characters fought a battle, level values (character information) of both the characters are compared and it is determined whether ability values (character information) of the characters should be updated on the basis of a result of the comparison. Thus, for example, when a character with a low level value has defeated a character with a high level value, it is possible to replace ability values of the character with a low level value with ability values of the character with a high level value. In this way, in a game that players play using terminals 1, it is possible to create an environment in which an action figure can be substantially transferred from a loser to winner of a battle. This makes it possible to provide a highly amusing game in which a collection nature in a game using action figures and contents of the game are associated.

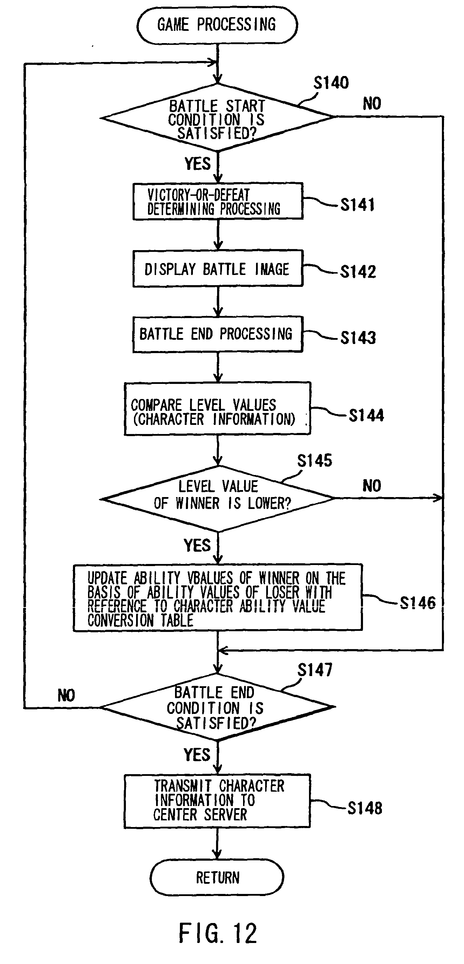

In the explanation of the embodiment described above, character information corresponding to one character ID data is updated on the basis of character information corresponding to character ID data identical with the character ID data. However, the invention is not limited to this example. For example, character information corresponding to one character ID data may be updated on the basis of character information corresponding to character ID data different from the character ID data. In such a case, in terminals constituting the game system of the invention, for example, processing described in Fig. 12 only has to be performed instead of the processing described in Fig. 10. Fig. 12 is a flowchart of another example of the game processing executed in the terminal 1.

First, the CPU 101 of the terminal 1 judges whether the battle starting condition is satisfied (step S140). When it is judged that the battle starting condition is satisfied, the CPU 101 performs win or loss determining processing for determining a process and a result of a battle (step S141). The CPU 101 causes the second rendering processing unit 112 to display a battle image on the second display 12 according to the determined process and result of the battle (step S142). Subsequently, the CPU 101 performs processing for updating ability values (character information) of characters stored in the RAM 103 according to the result of the battle determined in step S141 (step S143).

The CPU 101 compares a level value of a character of winner and a level value of a character of a loser (step S144) and judges whether the level value of the character of the winner is lower (step S145). When it is judged in step S145 that the level value of the character of the winner is lower, the CPU 101 performs processing for updating ability values of the character of the winner on the basis of ability values of the character of the loser with reference to a character ability value conversion table stored in the RAM 103 in advance (step S146).

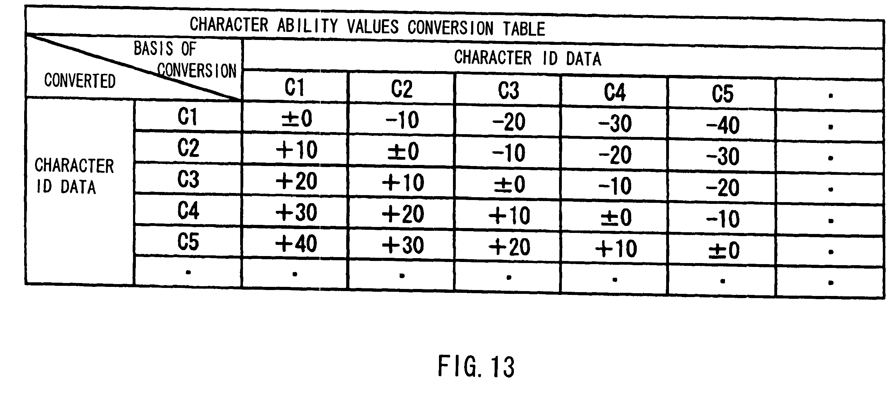

Fig. 13 is a diagram showing an example of the character ability value conversion table. Character ID data of a character whose ability values are converted (a character of winner in this context) is stored in a left column of the character ability value conversion table. On the other hand, character ID data of a character that is a basis of conversion of ability values (a character of a loser in this context) is stored in an upper column of the character ability value conversion table. Differences of ability values to be converted are stored in a central part of the character ability conversion table associated with the character ID data to be converted and the character ID data as the basis of conversion.

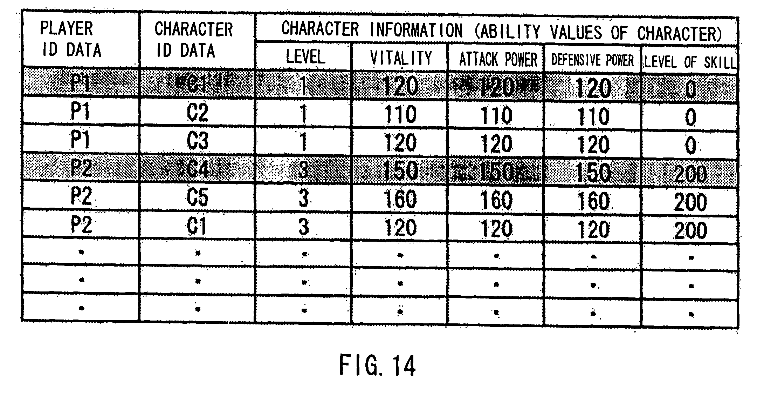

For example, when a character "C1" of a player "P1" and a character "C4" of a player "P2" fights a battle and the character "C1" of the player "P1" has won, since a level value of the character "C1" of the player "P1" is lower (steps S144 and S145), the processing in step S146 is executed. In this case, referring to the character ability value conversion table, since the character ID data to be converted is "C1" and the character ID data as the basis of conversion is "C4", difference of ability values is "-30". Therefore, when ability values (character information) of characters in the character information table (see Fig. 9) stored in the RAM 103 are updated with reference to the character ability value conversion table, as shown in Fig. 14, values obtained by subtracting 30 from ability values of the character "C4" of the player "P2" are ability values of the character "C1" of the player "P1".

When it is judged in step S140 that the battle starting condition is not satisfied, when it is judged in step S145 that the level value of the character of the winner is not lower, or when the processing in step S146 is executed, the CPU 101 judges whether the game ending condition is satisfied (step S147). When it is judged that the game ending condition is not satisfied, the CPU 101 shifts the processing to step S140. On the other hand, when it is judged in step S147 that the game ending condition is satisfied, the CPU 101 transmits the character information stored in the RAM 103 to the center server 3 (step S148) and ends this subroutine. Note that the character information transmitted to the center server 3 in step S148 is stored in the HD 902 included in the database server 9 of the center server 3 for eachplayer IDdata associated with character ID data.

By performing the processing described in Fig. 12, it is possible to create an environment in which even action figures representing different characters can be substantially exchanged and further improve a collection nature of action figures.

In the explanation of the embodiment described above, character information is updated, when a battle of characters ends, according to a result of the battle. However, the invention is not limited to this example. For example, it is also possible that an instruction to exchange action figures can be inputted at predetermined timing, for example, during progression of a game or before start of the game, and character information is updated when a player inputs the instruction through a terminal.

In the explanation of the embodiment described above, character information of a character corresponding to one player ID data is updated on the basis of character information of a character corresponding to another player ID data. However, in this case, it is desirable to concurrently perform processing for updating the character information of the character corresponding to another player ID data on the basis of the character information of the character corresponding to the one player ID data. This is because, since update of both pieces of the character information is performed mutually, it is possible to give players more intense feeling of exchanging action figures and further improve a collection nature of action figures.

The embodiment of the invention has been described. However, the embodiment simply describes a specific example and does not specifically limit the invention. It is possible to design and change specific constitutions of the respective means and the like as required. The effects described in the embodiment of the invention are only enumeration of most suitable effects derived from the invention. Effects attained by the invention are not limited to those described in the embodiment of the invention.

Additional advantages and modifications will readily occur to those skilled in the art. Therefore, the invention in its broader aspects is not limited to the specific details or representative embodiments shown and described herein. Accordingly, various modification may be made without departing from the spirit or scope of the general inventive concept as defined by the appended claims and their equivalents.

## Claims

1. A game system including a server and at least one terminal connected through a communication line, the game system executing a game that players play using the terminals and using objects representing characters, the game system comprising:
reading means that read character ID data peculiar to the characters stored in ID data storing means included in the objects to be read;
storing means that store the character ID data peculiar to the characters and character information of the characters associated with player ID data allocated to the players; and
character information updating means that update character information of a character stored in the storing means associated with one player ID data on a basis of character information of a character stored in the storing means associated with another player ID data.

2. The game system according to claim 1, further comprising win or loss determining means that determine a victoryor defeat of a battle between a character of one player and a character of another player, on the basis of the character information of the character stored in the storing means associated with one player ID data and the character information of the character stored in the storing means associated with the another player ID data,
wherein:
the character information updating means update the character information of the character stored in the storing means associated with the one player ID data on the basis of the character information of the character stored in the storing means associated with the another player ID data according to the victory or defeat the battle of the characters determined by the win or loss determining means.

3. The game system according to claim 2, further comprising update determining means that compare, when a victory or defeat is determined by the win or loss determining means, the character information of the character stored in the storing means associated with the one player ID data and the character information of the character stored in the storing means associated with the another player ID data, to determine whether the character information of the character stored in the storing means associated with the one player ID data should be updated on the basis of a result of the comparison.

4. The game system according to claim 2 or 3, further comprising judging means that judge, when it is determined by the win or loss determining means that the character associated with the one player ID data has won the game, whether character ID data identical with the character ID data of the character is present in one or plural character ID data stored in the storing means while associating the another player ID data.

5. A server for a game system including plural terminals and the server connected through a communication line, the game system executing a game that players play using the terminals and using objects representing characters, the server comprising:
storing means that receive, from the terminals that read character ID data peculiar to the characters stored in ID data storing means included in the objects to be read, and store the received character ID data peculiar to the characters and character information of the characters associated with player ID data allocated to the players; and
character information updating means that update character information of a character stored in the storing means associated with one player ID data on a basis of character information of a character stored in the storing means associated with another player ID data.

6. The server according to claim 5, further comprising win or loss determining means that determine a victory or defeat of a battle between a character of one player and a character of another player, on the basis of the character information of the character stored in the storing means associated with one player ID data and the character information of the character stored in the storing means associated with the another player ID data,
wherein:
the character information updating means update the character information of the character stored in the storing means associated with the one player ID data on the basis of the character information of the character stored in the storing means associated with the another player ID data according to the victory or defeat the battle of the characters determined by the win or loss determining means.

7. The server according to claim 6, further comprising update determining means that compare, when a victory or defeat is determined by the win or loss determining means, the character information of the character stored in the storing means associated with the one player ID data and the character information of the character stored in the storing means associated with the another player ID data, to determine whether the character information of the character stored in the storing means associated with the one player ID data should be updated on the basis of a result of the comparison.

8. The server according to claim 6 or 7, further comprising judging means that judge, when it is determined by the win or loss determining means that the character associated with the one player ID data has won the game, whether character ID data identical with the character ID data of the character is present in one or plural character ID data stored in the storing means while associating with the another player ID data.

9. A game processing method for executing a game that players play using the terminals and using objects representing characters, the method comprising:
a reading step of reading character ID data peculiar to the characters the character ID data being stored in ID data storing units included in the objects to be read;
a storing step of storing the character ID data peculiar to the characters and character information of the characters associated with player ID data allocated to the players; and
an updating step of updating character information of a character stored associated with one player ID data on the basis of character information of a character stored associated with the another player ID data.

10. The game processing method according to claim 9, further comprising a determining step of determining a victory or defeat of a battle between a character of one player and a character of another player, on the basis of the character information of the character stored associated with one player ID data and the character information of the character stored associated with the another player ID data,
wherein:
the updating step includes a step of updating the character information of the character stored associated with the one player ID data on the basis of the character information of the character stored associated with the another player ID data according to a result of the battle of the characters determined by the determining step.

11. The game processing method according to claim 10, further comprising a comparing step of comparing, when a victory or defeat is determined by the determining step, the character information of the character stored associated with the one player ID data and the character information of the character stored associated with the another player ID data, to determine whether the character information of the character stored associated with the one player ID data should be updated on the basis of a result of the comparison step.

12. The game processing method according to claim 11, further comprising a judging step of judging, when it is determined by the determining step that the character associated with the one player ID data has won the game, whether character ID data identical with the character ID data of the character is present in character ID data stored associated with the another player ID data.
